(19) Europäisches Patentamt
European Patent Office
Office européen des brevets

(11) **EP 4 144 797 A1**

(12) **EUROPEAN PATENT APPLICATION**
published in accordance with Art. 153(4) EPC

(43) Date of publication:
**08.03.2023 Bulletin 2023/10**

(21) Application number: **21796651.4**

(22) Date of filing: **28.04.2021**

(51) International Patent Classification (IPC):
*C08L 27/16* (2006.01)    *C08F 214/22* (2006.01)
*C08K 3/00* (2006.01)    *C08K 5/00* (2006.01)
*H01B 1/06* (2006.01)    *H01G 9/20* (2006.01)
*H01G 11/56* (2013.01)    *H01M 6/18* (2006.01)
*H01M 8/10* (2006.01)    *H01M 8/1039* (2016.01)
*H01M 8/1048* (2016.01)    *H01M 10/0525* (2010.01)
*H01M 10/0565* (2010.01)

(52) Cooperative Patent Classification (CPC):
**C08F 214/22; C08K 3/00; C08K 5/00; C08L 27/16; H01B 1/06; H01G 9/20; H01G 11/56; H01M 6/18; H01M 8/10; H01M 8/1039; H01M 8/1048; H01M 10/0525; H01M 10/0565;** Y02E 60/10; Y02E 60/50

(86) International application number:
**PCT/JP2021/017013**

(87) International publication number:
**WO 2021/221112 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.05.2020 JP 2020081426**

(71) Applicant: Daikin Industries, Ltd.
Osaka-shi, Osaka 530-8323 (JP)

(72) Inventors:
• **TANI, Akinori**
Osaka-shi, Osaka 530-8323 (JP)
• **TERADA, Junpei**
Osaka-shi, Osaka 530-8323 (JP)
• **YAMADA, Takaya**
Osaka-shi, Osaka 530-8323 (JP)
• **FUJIWARA, Kae**
Osaka-shi, Osaka 530-8323 (JP)

(74) Representative: **Hoffmann Eitle**
**Patent- und Rechtsanwälte PartmbB**
**Arabellastraße 30**
**81925 München (DE)**

(54) **COMPOSITE, POLYMER ELECTROLYTE, ELECTROCHEMICAL DEVICE, POLYMER-BASED SOLID-STATE BATTERY AND ACTUATOR**

(57)    Provided are a composite that can be suitably used as an electrolyte for polymer-based solid-state batteries and is excellent in oxidation resistance and flame retardancy, and various electrochemical devices using such a composite. The composite contains a fluorine-containing copolymer that comprises a tetrafluoroethylene (TFE) unit and a vinylidene fluoride (VdF) unit, and an alkali metal salt, wherein the total content of the TFE unit and the VdF unit in the fluorine-containing copolymer is 1 to 99 mol%, and the composite has a volatile content of 0.1 mass% or less with respect to the entire composite.

EP 4 144 797 A1

## Description

Technical Field

The present disclosure relates to a composite, a polymer electrolyte, an electrochemical device, a polymer-based solid-state battery, and an actuator.

Background Art

In recent years, solid-state electrolytes having high ion-conducting property comparable to non-aqueous electrolytic solution have been developed, and the development for practical use of all solid-state batteries has been accelerated.

Patent Document 1 discloses a polymer electrolyte in which a vinylidene copolymer consisting of 35 to 99 mol% of a repeating unit derived from vinylidene fluoride, 1 to 50 mol% of a repeating unit derived from tetrafluoroethylene, and 0 to 20 mol% of a monomer copolymerizable with these and having a melting point of 80°C or more and a crystallinity of 20 to 80% is impregnated with a non-aqueous electrolyte.

Patent Document 2 discloses a composition comprising a vinylidene fluoride-tetrafluoroethylene copolymer obtained by copolymerizing 1 to 15 mass% of tetrafluoroethylene and an organic solvent capable of dissolving a lithium salt.

Related Art

Patent Documents

Patent Document 1: International Publication No. 1999/028916
Patent Document 2: Japanese Patent Laid-Open No. 2001-35534

Summary Of The Invention

Problem To Be Solved By The Invention

It is an object of the present invention to provide a composite that is excellent in oxidation resistance and flame retardancy and can be suitably used as an electrolyte, and various electrochemical devices using the aforementioned composite.

Means For Solving The Problem

The present disclosure relates to a composite comprising a fluorine-containing copolymer that comprises a tetrafluoroethylene (TFE) unit and a vinylidene fluoride (VdF) unit, and an alkali metal salt, wherein the total of content of the TFE unit and the VdF unit in the fluorine-containing copolymer is 1 to 99 mol%, and the volatile content is 0.1 mass% or less with respect to the entire composite.

The fluorine-containing copolymer preferably further comprises 0.1 to 10 mol% of a hexafluoropropylene (HFP) unit.

The alkali metal salt is at least one lithium salt selected from $LiPF_6$, $LiBF_4$, LiTFSI, LiFSI, $LiPO_2F_2$, and LiBOB, and the content of the alkali metal salt is preferably 0.1 to 90 mass% with respect to the fluorine-containing copolymer.

The composite further comprises: at least one ionic liquid selected from combinations of 1-butyl-3-methyl imidazolium (BMI) cation or N-methyl-N-butyl-pyrrolidium (Pyr14) cation as an organic cation and BF4 anion or bis(trifluoromethanesulfonyl) imide (TFSI) anion as an anion, wherein the content of the ionic liquid is preferably 1.0 to 500 mass% with respect to the fluorine-containing copolymer.

The present disclosure is also a polymer electrolyte consisting of the composite described above.

The present disclosure is also an electrochemical device comprising the polymer electrolyte.

The present disclosure is also a polymer-based solid-state battery comprising the polymer electrolyte.

The polymer-based solid-state battery is preferably a lithium ion secondary battery.

The present disclosure is also an actuator comprising the polymer electrolyte.

Effect Of Invention

The composite of the present disclosure can be suitably used as an electrolyte in an electrochemical device such as a solid-state secondary battery, since it is a copolymer composition that is excellent in oxidation resistance, flame retardancy, and the like.

Brief Description Of Drawings

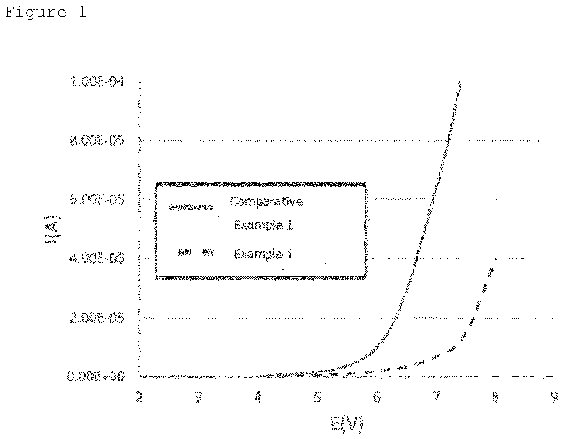

[Figure 1] Figure 1 shows the data of the oxidation resistance test for Example 1 and Comparative Example 1.

Description Of Embodiments

Hereinafter, the present disclosure will be described in detail.
In recent years, polymer-based solid-state batteries have been developed as a type of solid-state batteries. Such a polymer-based solid-state battery generally comprises a polymer electrolyte consisting of a polymer, an electrolyte, an additive, a plasticizer, an electrolytic solution, and the like, and has an advantage of high safety due to no risk of leakage.
As polymers used for the polymer electrolyte, fluorine-containing polymers have been developed. A fluorine-containing polymer is a component excellent in oxidation resistance, flame retardancy, and the like, and thus has advantages such as being difficult to ignite and being applicable to the roll-to-roll system. An object of the present disclosure is to develop a composite that has performance as a fluorine-containing polymer and is excellent in safety.
The composite of the present disclosure comprises a fluorine-containing copolymer containing 1 to 99 mol% of a tetrafluoroethylene (TFE) unit and a vinylidene fluoride (VdF) unit in total and having a volatile content of 0.1 mass% or less, thereby having both excellent oxidation resistance and excellent flame retardancy. In the conventional polymer-based solid-state battery disclosed in Patent Document 2, the electrolyte swells volatile organic solvents and thus contains many volatile components, which has been problematic in safety.
Hereinafter, the composite of the present disclosure will be described in detail.
The composite of the present disclosure is a composite comprising a fluorine-containing copolymer and an alkali metal salt.
The fluorine-containing copolymer comprises a tetrafluoroethylene (TFE) unit and a vinylidene fluoride (VdF) unit, and the total content of the TFE unit and the VdF unit is 1 to 99 mol%. The total content is preferably 10 mol% or more, more preferably 20 mol% or more.
The content of the VdF unit in the fluorine-containing copolymer is preferably 60.0 mol% or more, more preferably 65.0 mol% or more, further preferably 70.0 mol% or more, particularly preferably 75.0 mol% or more, and preferably 95.0 mol% or less, most preferably 90.0 mol% or less, with respect to all monomer units.
The content of the TFE unit in the fluorine-containing copolymer is preferably 5.0 mol% or more, more preferably 8.0 mol% or more, particularly preferably 10.0 mol% or more, and preferably 40.0 mol% or less, more preferably 38.0 mol% or less, particularly preferably 35.0 mol% or less, with respect to all monomer units.
In the present disclosure, the compositional features of the fluorine-containing copolymer can be measured, for example, by $^{19}$F-NMR measurement.
In the fluorine-containing copolymer, the molar ratio of the VdF unit to the TFE unit (VdF unit /TFE unit) is preferably 60/40 to 90/10. The molar ratio falling within the aforementioned range can allow a fluorine-containing copolymer that can easily form a film to be obtained.
The fluorine-containing copolymer may further contain another fluorinated monomer unit. The fluorinated monomer (however, excluding TFE and VdF) is preferably at least one selected from the group consisting of vinyl fluoride, trifluoroethylene, chlorotrifluoroethylene (CTFE), fluoroalkyl vinyl ether, hexafluoropropylene (HFP), (perfluoroalkyl) ethylene, 2,3,3,3-tetrafluoropropene, and trans-1,3,3,3-tetrafluoropropene, more preferably at least one selected from the group consisting of CTFE and HFP, particularly preferably HFP.
Such a fluorinated monomer unit may or may not have a polar group.
Further, the fluorine-containing copolymer may further contain a non-fluorinated monomer unit.
The molar ratio of the VdF unit to the TFE unit (VdF unit /TFE unit) in the fluorine-containing copolymer is preferably 60/40 to 95/5, more preferably 60/40 to 90/10, further preferably 63/37 to 88/12, particularly preferably 70/30 to 88/12, most preferably 75/25 to 88/12.
The mass-average molecular weight (in terms of polystyrene) of the fluorine-containing copolymer is preferably 10,000 to 7,200,000, more preferably 20,000 to 6,600,000. The mass-average molecular weight can be measured by gel permeation chromatography (GPC) using dimethylformamide as a solvent at 50°C.
The number-average molecular weight (in terms of polystyrene) of the fluorine-containing copolymer is preferably 10,000 to 1,200,000, more preferably 40,000 to 1,100,000. The number-average molecular weight can be measured by gel permeation chromatography (GPC) using dimethylformamide as a solvent at 50°C.

The melting point of the fluorine-containing copolymer is preferably 100 to 240°C. The melting point can be determined using a differential scanning calorimetry (DSC) device and is a temperature corresponding to the maximum value in the heat-of-fusion curve when the temperature is raised at a rate of 10°C/minute.

The fluorine-containing copolymers may be used alone, or in combination of two or more. In particular, two types of copolymers having different molecular structures may be used in combination in some embodiments. Examples of the embodiments in which two types of copolymers having different molecular structures are used in combination include an embodiment using two copolymers (I) having different molecular structures, an embodiment using two copolymers (II) having different molecular structures, and an embodiment using one copolymer (I) and one copolymer (II) in combination.

(Alkali metal salt)

The composite of the present disclosure comprises an alkali metal salt.

The alkali metal salt can be expressed as MX, wherein M represents an alkali metal, and X represents a substance serving as a counter anion. The alkali metal salt may be used alone, or two or more of them may be used in the form of a mixture.

The alkali metal salt is particularly preferably a lithium salt (that is, a compound represented by LiX).

Any lithium salt can be used, and specific examples are as follows. For example, inorganic lithium salts such as $LiPF_6$, $LiBF_4$, $LiClO_4$, $LiAlF_4$, $LiSbF_6$, $LiTaF_6$, $LiWF_7$, $LiAsF_6$, $LiAlCl_4$, LiI, LiBr, LiCl, $LiB_{10}Cl_{10}$, $Li_2SiF_6$, $Li_2PFO_3$, and $LiPO_2F_2$; lithium tungstates such as $LiWOF_5$; lithium carboxylates such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium salts having an S=O group such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3Li$, lithium methyl sulfate, lithium ethyl sulfate($C_2H_5OSO_3Li$) , and lithium 2,2,2-trifluoroethyl sulfate; lithium imide salts such as LiTFSI, LiFSI, $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium bisperfluoroethanesulfonylimide, lithium cyclic 1,2-perfluoroethanedisulfonylimide, lithium cyclic 1,3-perfluoropropanedisulfonylimide, lithium cyclic 1,2-ethanedisulfonylimide, lithium cyclic 1,3-propanedisulfonylimide, lithium cyclic 1,4-perfluorobutanedisulfonylimide, $LiN(CF_3SO_2)(FSO_2)$, $LiN(CF_3SO_2)(C_3F_7SO_2)$, $LiN(CF_3SO_2)(C_4F_9SO_2)$, and $LiN(POF_2)_2$; lithium methide salts such as $LiC(FSO_2)_3$, $LiC(CF_3SO_2)_3$, and $LiC(C_2F_5SO_2)_3$; other fluorine-containing organic lithium salts such as a salt represented by formula: $LiPF_a(C_nF_{2n+1})_{6-a}$, wherein a is an integer of 0 to 5, and n is an integer of 1 to 6, (for example, $LiPF_3(C_2F_5)_3$, $LiPF_3(CF_3)_3$, $LiPF_3(iso-C_3F_7)_3$, $LiPF_5(iso-C_3F_7)$, $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; LiBOB, LiTDI, LiSCN, $LiB(CN)_4$, $LiB(C_6H_5)_4$, $Li_2(C_2O_4)$, $LiP(C_2O_4)_3$, $Li_2B_{12}F_bH_{12-b}$(b is an integer of 0 to 3), and the like, can be mentioned.

Among them, $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonylimide, lithium cyclic 1,3-perfluoropropanedisulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, LiTFSI, LiFSI, LiBOB, LiTDI, and the like, are particularly preferable due to their effects of improving the output characteristics, the high rate charge/discharge characteristics, the high-temperature storage characteristics, the cycle characteristics, and the like, and at least one lithium salt selected from the group consisting of $LiPF_6$, $LiBF_4$, LiTFSI, LiFSI, $LiPO_2F_2$, and LiBOB is most preferable.

These electrolyte salts may be used alone, or in combination of two or more. Preferable examples in the case of using two or more in combination include a combination of $LiPF_6$ and $LiBF_4$, which has effects of improving the high-temperature storage characteristics, the load characteristic, and the cycle characteristics.

In the composite of the present disclosure, the amount of the alkali metal salt to be mixed is preferably 0.1 mass% or more, more preferably 1.0 mass% or more, with respect to the fluorine-containing copolymer. Further, the amount is preferably 90 mass% or less, more preferably 80 mass% or less, further preferably 70 mass% or less.

Further, another example is a combination of an inorganic lithium salt and an organic lithium salt, and the combination of these two has an effect of suppressing the deterioration due to high-temperature storage. Preferable examples of the organic lithium salt include $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonylimide, lithium cyclic 1,3-perfluoropropanedisulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In such a case, the proportion of the organic lithium salt is preferably 0.1 mass% or more, particularly preferably 0.5 mass% or more, and preferably 30 mass% or less, particularly preferably 20 mass% or less, with respect to 100 mass% of the entire composite.

The concentration of such an alkali metal salt in the composite is not limited as long as the effects of the present disclosure are not impaired. For achieving the electric conductivity of the composite falling within a good range and ensuring good battery performance, the total molar concentration of lithium in the composite is preferably 0.3 mol/L or more, more preferably 0.4 mol/L or more, further preferably 0.5 mol/L or more, and preferably 5.0 mol/L or less, more preferably 4.5 mol/L or less, further preferably 4.0 mol/L or less.

When the total molar concentration of lithium is excessively low, the electric conductivity of the composite may be insufficient, whereas when the concentration is excessively high, the electrical conductivity may decrease due to an increase in viscosity, which may result in a decrease in battery performance.

(Ionic liquid)

The composite of the present disclosure may further comprise an ionic liquid.

The "ionic liquid" is a liquid consisting of ions combining organic cations with anions. Containing the ionic liquid can increase the ion conductivity. Negligible vapor pressure and non-flammability are also desirable features.

Examples of the organic cations include, but are not limited to, imidazolium ions such as dialkyl imidazolium cation and trialkyl imidazolium cation; tetraalkylammonium ions; alkylpyridinium ions; dialkylpyrrolidinium ions; and dialkylpiperidinium ions.

Examples of the counter anions of these organic cations include, but are not limited to, $PF_6$ anion, $PF_3(C_2F_5)_3$ anion, $PF_3(CF_3)_3$ anion, $BF_4$ anion, $BF_2(CF_3)_2$ anion, $BF_3(CF_3)$ anion, bisoxalato borate anion, $P(C_2O_4)F_2$ anion, Tf (trifluoromethanesulfonyl) anion, Nf (nonafluorobutanesulfonyl) anion, bis(fluorosulfonyl) imide anion, bis(trifluoromethanesulfonyl) imide (TFSI) anion, bis(pentafluoroethanesulfonyl) imide anion, dicyanoamine anion, and halide anion.

The ionic liquid is preferably at least one selected from combinations of 1-butyl-3-methyl imidazolium (BMI) cation or N-methyl-N-butyl-pyrrolidium (Pyr14) cation, as an organic cation, and $BF_4$ anion, bis(fluorosulfonyl) imide (FSI) anion, or bis(trifluoromethanesulfonyl) imide (TFSI) anion, as an anion.

Among these, TFSI is particularly preferable.

The content of the ionic liquid is preferably 1.0 to 500 mass% with respect to the fluorine-containing copolymer. The lower limit is more preferably 10 mass%, and the upper limit is more preferably 300 mass%.

(Other additives)

For improving the electric conductivity, metal fillers such as $TiO_2$ and $Al_2O_3$ may be added as other additives. The content of the additives is preferably 0.1 to 10 mass% with respect to the fluorine-containing copolymer. It is more preferably 0.2 to 5 mass%.

The composite of the present disclosure contains 0.1 mass% or less of volatile components with respect to the entire composite. Containing such an extremely low amount of volatile components gives an advantage of long-term reliability.

The composite of the present disclosure is preferably flame retardant. The flame retardant property is particularly preferable since it allows safe use in various electrochemical devices.

Flame retardant" means that the evaluation result of "No flame transferred from naked flame" is obtained in the evaluation of flame retardancy in Examples, which will be described later in detail.

Setting the volatile content to 0.1 mass% or less gives excellent oxidation resistance, excellent flame retardancy, excellent heat resistance, and excellent film-forming property, as well as high ion-conducting property. Polymer compositions that have been used as electrolytes for polymer-based solid-state batteries up to now have a volatile content of about 10 mass%, which is higher than that of the composite of the present disclosure. Therefore, there have been disadvantages such as limited operating temperature range and poor long-term reliability.

The method for adjusting the volatile content in the composite within such a range is not limited, and examples thereof can include a method of heating the composite film obtained as a thin film under reduced pressure, followed by drying.

The volatile content in the present disclosure is a value determined by the later-described method in Examples.

(Production method)

The method for producing the composite is not limited, and any method can be used for preparation. For example, it can be obtained by dispersing the fluorine-containing copolymer, an alkali metal salt, and an ionic liquid, and an additive and the like, as required, in a solvent, and applying the dispersion obtained into a thin film.

The type of the solvent for forming such a dispersion is not limited, as long as it is a solvent capable of dissolving or dispersing the components. Any of aqueous solvents and organic solvents may be used. Examples of the aqueous solvents include water and a mixed solvent of an alcohol and water. Examples of the organic solvents include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropyl amine; ethers such as diethyl ether, propylene oxide, and tetrahydrofuran (THF); amides such as N-methylpyrrolidone (NMP), dimethylformamide, and dimethylacetamide; and polar aprotic solvents such as hexamethylphosphamide and dimethylsulfoxide.

Further, it is also possible to produce the dispersion by kneading the fluorine-containing copolymer, an alkali metal salt, and an ionic liquid, and an additive and the like as required, without a solvent and then forming the mixture.

(Electrochemical device)

The composite of the present disclosure can be suitably used as an electrolyte for various electrochemical devices. An electrochemical device including a polymer electrolyte consisting of the composite is also one aspect of the present disclosure.

The electrochemical device is not limited and can be one of conventionally known electrochemical devices. Specifically, secondary batteries such as lithium ion batteries, primary batteries such as lithium batteries, sodium ion batteries, magnesium ion batteries, radical batteries, solar cells (especially dye-sensitized solar cells), fuel cells; capacitors such as lithium ion capacitors, hybrid capacitors, electrochemical capacitors, and electric double-layer capacitors; actuators such as cylinders, swing motors, and motors; various condensers such as aluminum electrolytic condensers and tantalum electrolytic condensers; and electronic elements, electrochemical switching elements, various electrochemical sensors, and the like, can be mentioned.

Among these, since it has a high capacity and a large output, the composite can be suitably used for secondary batteries that undergo a large volume change due to movement of a large amount of metal ions.

(Secondary solid-state battery)

The present disclosure is also a secondary solid-state battery comprising the composite of the present disclosure as a polymer electrolyte.

The secondary solid-state battery of the present disclosure is a polymer-based solid-state battery comprising: a positive electrode and a negative electrode, each consisting of a positive electrode active material or a negative electrode active material, a binder, and a current collector; and a polymer electrolyte layer consisting of the composite interposed between the positive electrode and the negative electrode. The secondary solid-state battery is preferably a lithium ion battery.

The positive electrode active material and the negative electrode active material are not limited, and examples thereof can include those used for known electrochemical devices such as secondary batteries including lead batteries, nickel-cadmium batteries, nickel-hydrogen batteries, lithium ion batteries, and alkali metal sulfur batteries, and electric double-layer capacitors.

(Positive electrode)

The positive electrode active material is not limited, and examples thereof can include those used for known electrochemical devices. Specifically, the positive electrode active material of a lithium ion secondary battery is not limited, as long as it is capable of electrochemically absorbing/desorbing lithium ions. Examples thereof include a lithium-containing transition metal composite oxide, a lithium-containing transition metal phosphate compound, a sulfur material, and an electrically conductive polymer. Among these, the positive electrode active material is preferably a lithium-containing transition metal composite oxide or a lithium-containing transition metal phosphate compound, and a lithium-containing transition metal composite oxide that produces a high voltage is particularly preferable.

The transition metal of the lithium-containing transition metal composite oxide is preferably V, Ti, Cr, Mn, Fe, Co, Ni, Cu, or the like. Specific examples of the lithium-transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, and $Li_2MnO_3$, and those with some of the transition metal atoms that are main components of these lithium-transition metal composite oxides substituted by other metals such as Al, Ti, V, Cr, Mn, Fe, Co, Li, Ni, Cu, Zn, Mg, Ga, Zr, and Si. Examples of those substituted include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide. More specifically, examples thereof include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

The transition metal of a lithium-containing transition metal phosphate compound is preferably V, Ti, Cr, Mn, Fe, Co, Ni, Cu, or the like. Specific examples of the lithium-containing transition metal phosphate compound include iron phosphates such as $LiFePO_4$, $Li_3Fe_2(PO_4)_3$, and $LiFeP_2O_7$, cobalt phosphates such as $LiCoPO_4$, and those with some of the transition metal atoms that are main components of these lithium transition metal phosphate compounds substituted by other metals such as Al, Ti, V, Cr, Mn, Fe, Co, Li, Ni, Cu, Zn, Mg, Ga, Zr, Nb, and Si.

**EP 4 144 797 A1**

In particular, for high voltage, high energy density, or charge/discharge cycle characteristics, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable.

Examples of the sulfur material can include a material containing a sulfur atom. At least one selected from the group consisting of elemental sulfur, a metal sulfide, and an organic sulfur compound is preferable, and elemental sulfur is more preferable. The metal sulfide may be a metal polysulfide. The organic sulfur compound may be an organic polysulfide.

Examples of the metal sulfide include a compound represented by $LiS_x$ ($0 < x \leq 8$); a compound represented by $Li_2S_x$ ($0 < x \leq 8$); a compound with a two-dimensional layered structure such as $TiS_2$ and $MoS_2$; and a Chevrel compound with a strong three-dimensional skeletal structure represented by $Me_xMo_6S_8$, wherein Me is one of various transition metals typified by Pb, Ag, and Cu.

Examples of the organic sulfur compound include a carbon sulfide compound.

The organic sulfur compound may be used as a carbon composite material while being carried by a material having pores such as carbon. The content of sulfur in the carbon composite material is preferably 10 to 99 mass%, more preferably 20 mass% or more, further preferably 30 mass% or more, particularly preferably 40 mass% or more, and preferably 85 mass% or less, with respect to the carbon composite material, for further excellent cycle performance and further reduced overvoltage.

In the case where the positive electrode active material is the elemental sulfur, the content of sulfur in the positive electrode active material is equal to the content of the elemental sulfur.

Examples of the electrically conductive polymer include a p-doped electrically conductive polymer and an n-doped electrically conductive polymer. Examples of the electrically conductive polymer include a polyacetylene polymer, a polyphenylene polymer, a heterocyclic polymer, an ionic polymer, and a ladder or network polymer.

In the present disclosure, these positive electrode active materials may be used alone, or two or more of them having different compositional features or different powder physical properties may be used in any combination at any ratio.

The positive electrode preferably further contains a binder, a thickener, a conductive additive, and the like.

Any material can be used as the binder, as long as it is a safe material for the solvent and the electrolytic solution used in production of the electrode. Examples thereof include polyvinylidene fluoride, polytetrafluoroethylene, polyethylene, polypropylene, SBR (styrene-butadiene rubber), isoprene elastomer, butadiene elastomer, ethylene-acrylic acid copolymer, ethylene-methacrylic acid copolymer, polyethylene terephthalate, polymethyl methacrylate, polyimide, aromatic polyamide, cellulose, nitro cellulose, NBR (acrylonitrile-butadiene rubber), fluoroelastomer, ethylene-propylene elastomer, styrene-butadiene-styrene block copolymer or a hydrogenated product thereof, EPDM (ethylene-propylene-diene ternary copolymer), styrene-ethylene-butadiene-ethylene copolymer, styrene-isoprene-styrene block copolymer or a hydrogenated product thereof, syndiotactic-1,2-polybutadiene, polyvinyl acetate, ethylene-vinyl acetate copolymer, propylene-$\alpha$-olefin copolymer, polyvinylidene fluoride, vinylidene fluoride-tetrafluoroethylene copolymer, tetrafluoroethylene-ethylene copolymer, and a polymer composition having an ion-conducting property of alkali metal ions (especially lithium ions). These substances may be used alone, or in any combination of two or more at any ratio.

The content of the binder is generally 0.1 mass% or more, preferably 1 mass% or more, further preferably 1.5 mass% or more, and generally 80 mass% or less, preferably 60 mass% or less, further preferably 40 mass% or less, most preferably 10 mass% or less, as a proportion of the binder in the positive electrode active material layer. When the proportion of the binder is excessively low, the positive electrode active material cannot be sufficiently held, and the mechanical strength of the positive electrode becomes insufficient, which may result in deterioration of battery performance such as cycle characteristics. Meanwhile, an excessively high proportion may lead to a decrease in battery capacity and electric conductivity.

Examples of the thickener include carboxymethylcellulose, methylcellulose, hydroxymethylcellulose, ethylcellulose, polyvinyl alcohol, oxidized starch, phosphorylated starch, casein, and the salts of these. They may be used alone, or in any combination of two or more at any ratio.

The proportion of the thickener with respect to the positive electrode active material is generally 0.1 mass% or more, preferably 0.2 mass% or more, more preferably 0.3 mass% or more, and generally 5 mass% or less, preferably 3 mass% or less, more preferably 2 mass% or less. When it falls below such a range, the coating properties may considerably decrease. When it exceeds such a range, the proportion of the active material in the positive electrode active material layer decreases, which may result in a problem of the decrease in battery capacity or a problem of an increase in the resistance between positive electrode active materials.

The conductive additive is not limited, as long as it can improve the electric conductivity of the electrolyte, but examples thereof can include carbon blacks such as acetylene black and Ketjenblack; carbon fibers such as a multi-walled carbon nanotube, a single-walled carbon nanotube, carbon nanofibers, graphene, and vapor grown carbon fibers (VGCF); and metal powders such as SUS powder and aluminum powder.

(Negative electrode)

The negative electrode is constituted by a negative electrode active material layer containing a negative electrode active material and a current collector. The negative electrode active material is not limited, and those used in known electrochemical devices can be mentioned. Specifically, the negative electrode active material of a lithium ion secondary battery is not limited, as long as it is capable of electrochemically absorbing/desorbing lithium ions. Specific examples include a carbonaceous material, an alloy material, a lithium-containing metal composite oxide material, and an electrically conductive polymer. These may be used alone, or in any combination of two or more.

The carbonaceous material capable of absorbing/desorbing lithium is preferably artificial graphite, which is produced by high-temperature treatment of graphitizable pitches obtained from various raw materials, or purified natural graphite, or those obtained by surface treatment of such graphite with pitches or other organic substances followed by carbonization. One selected from natural graphite, artificial graphite, an artificial carbonaceous substance, and a carbonaceous material obtained by heat-treating an artificial graphite substance in the range of 400 to 3,200°C once or more, a carbonaceous material in which the negative electrode active material layer consists of at least two or more carbonaceous matters having different crystallinities and/or has an interface where the carbonaceous matters having different crystallinities are in contact, and a carbonaceous material in which the negative electrode active material layer has an interface where at least two or more carbonaceous matters having different orientation properties are in contact is more preferable, for good balance between the initial irreversible capacity and the charge/discharge characteristics at high-current density. These carbon materials may be used alone, or in any combination of two or more at any ratio.

Examples of the carbonaceous material obtained by heat-treating the artificial carbonaceous substance and the artificial graphite substance in the range of 400 to 3,200°C once or more include pyrolysis products of organic substances such as a carbon nanotube, graphene, coal coke, petroleum coke, coal pitch, petroleum pitch and those obtained by oxidizing these pitches, needle coke, pitch coke and a carbon agent obtained by partially graphitizing these, furnace black, acetylene black, and pitch carbon fibers, carbonizable organic substances and carbides thereof, or solutions of carbonizable organic substances dissolved in low-molecular weight organic solvents such as benzene, toluene, xylene, quinoline, and n-hexane and carbides thereof.

The metal material (however, excluding lithium titanium composite oxides) used as the negative electrode active material is not limited, as long as it is capable of absorbing/desorbing lithium, and may be any of single lithium, a single metal and alloy forming a lithium alloy, or a compound such as oxide, carbide, nitride, silicide, sulfide, or phosphide thereof. The single metal and alloy forming a lithium alloy is preferably a material containing group 13 and group 14 metal/metalloid elements, more preferably a single metal such as aluminum, silicon, and tin (hereinafter abbreviated to as "specific metal elements") and alloy or a compound containing these atoms. These may be used alone, or in any combination of two or more at any ratio.

Examples of the negative electrode active material having at least one atom selected from the specific metal elements include any one metal alone of the specific metal elements, an alloy consisting of two or more specific metal elements, an alloy consisting of one or more specific metal elements and another or more metal elements, and a compound containing one or more specific metal elements, and a composite compound such as oxide, carbide, nitride, silicide, sulfide, or phosphide of the compound. Use of such a metal alone, alloy, or metal compound as the negative electrode active material can increase the capacity of the battery.

Any one of conventionally known metal particles that can be alloyed with Li can be used, but the metal particles are preferably composed of a metal selected from the group consisting of Fe, Co, Sb, Bi, Pb, Ni, Ag, Si, Sn, Al, Zr, Cr, P, S, V, Mn, Nb, Mo, Cu, Zn, Ge, In, and Ti or a compound thereof, in view of the capacity and the cycle lifetime. Further, an alloy consisting of two or more metals may be used, or the metal particles may be alloy particles formed from two or more metal elements. Among these, a metal or a metal compound thereof selected from the group consisting of Si, Sn, As, Sb, Al, Zn, and W is preferable.

Examples of the metal compound include a metal oxide, a metal nitride, and a metal carbide. Also, an alloy consisting of two or more metals may be used.

Compounds in which these composite compounds are intricately bound to several types of elements of elemental metals, alloys, or non-metal elements are also included. Specifically, an alloy of an element such as silicon and tin and a metal that does not act as the negative electrode can be used. For example, in the case of tin, a complex compound containing 5 to 6 types of elements in combination of a metal other than tin and silicon that acts as the negative electrode, a metal that does not act as the negative electrode, and a non-metal element also can be used.

Among the metal particles that can be alloyed with Li, Si or a Si metal compound is preferable. The Si metal compound is preferably a Si metal oxide. Si or a Si metal compound is preferable for increasing the capacity. In this description, Si or a Si metal compound is generally refer to as a Si compound. Specific examples of the Si compound include $SiO_x$, $SiN_x$, $SiC_x$, and $SiZ_xO_y$ (Z = C,N). The Si compound is preferably a Si metal oxide, and the Si metal oxide is represented by a formula $SiO_x$. The formula $SiO_x$ is obtained by using silicon dioxide ($SiO_2$) and metal Si (Si) as raw materials, and the value of x is generally $0 \le x < 2$. $SiO_x$ has a larger theoretical capacity than graphite, and amorphous Si or nano-sized Si crystals facilitates the entry and exit of alkali ions such as lithium ions, thereby enabling a high capacity to be obtained.

The Si metal oxide is specifically represented as $SiO_x$, where x is $0 \leq x < 2$, more preferably 0.2 or more, and 1.8 or less, further preferably 0.4 or more and 1.6 or less, particularly preferably 0.6 or more and 1.4 or less, particular preferably $X = 0$. Within such a range, the irreversible capacity due to the binding of Li and oxygen can be reduced while achieving a high capacity.

Further, a composite material containing the second and third constituent elements in addition to Si or Sn as a first constituent element can be mentioned. The second constituent element is, for example, at least one selected from cobalt, iron, magnesium, titanium, vanadium, chromium, manganese, nickel, copper, zinc, gallium, and zirconium. The third constituent element is, for example, at least one selected from boron, carbon, aluminum, and phosphorus.

The lithium-containing metal composite oxide material used as the negative electrode active material is not limited, as long as it is capable of absorbing/desorbing lithium, but a material containing titanium and lithium is preferable, a lithium-containing composite metal oxide material containing titanium is more preferable, and a composite oxide of lithium and titanium (hereinafter abbreviated as "lithium titanium composite oxide") is further preferable, in view of the charge/discharge characteristics at high-current density. That is, use of a lithium titanium composite oxide having a spinel structure contained in a negative electrode active material for batteries is particularly preferable since the output resistance is significantly reduced.

The lithium titanium composite oxide is preferably a compound represented by formula:

$$Li_xTi_yM_zO_4$$

wherein M represents at least one element selected from the group consisting of Na, K, Co, Al, Fe, Ti, Mg, Cr, Ga, Cu, Zn and Nb. Among the aforementioned compositional features, the structures of:

(i) $1.2 \leq x \leq 1.4$, $1.5 \leq y \leq 1.7$, $z = 0$;
(ii) $0.9 \leq x \leq 1.1$, $1.9 \leq y \leq 2.1$, $z = 0$; and
(iii) $0.7 \leq x \leq 0.9$, $2.1 \leq y \leq 2.3$, $z = 0$

are particularly preferable, for balanced battery performance.

Particularly preferable representative compositional features of the aforementioned compounds are $Li_{4/3}Ti_{5/3}O_4$ in (i), $Li_1Ti_2O_4$ in (ii), and $Li_{4/5}Ti_{11/5}O_4$ in (iii). For the structure of $Z \neq 0$, preferable examples include $Li_{4/3}Ti_{4/3}Al_{1/3}O_4$.

The negative electrode preferably further comprises a binder, a thickener, and a conductive additive.

Examples of the binder include those similar to the binder that can be used for the positive electrode. The proportion of the binder with respect to the negative electrode active material is preferably 0.1 mass% or more, further preferably 0.5 mass% or more, particularly preferably 0.6 mass% or more, and preferably 20 mass% or less, more preferably 15 mass% or less, further preferably 10 mass% or less, particularly preferably 8 mass% or less. When the proportion of the binder with respect to the negative electrode active material exceeds such a range, the proportion of the binder that does not contribute to the battery capacity increases, which may lead to a decrease in the battery capacity. When the proportion falls below such a range, the strength of the negative electrode may decrease.

In particular, in the case of containing a rubbery polymer typified by SBR as a main component, the proportion of the binder with respect to the negative electrode active material is generally 0.1 mass% or more, preferably 0.5 mass% or more, further preferably 0.6 mass% or more, and generally 5 mass% or less, preferably 3 mass% or less, further preferably 2 mass% or less. Further, in the case of containing a fluorine-containing polymer typified by polyvinylidene fluoride as a main component, the proportion with respect to the negative electrode active material is generally 1 mass% or more, preferably 2 mass% or more, further preferably 3 mass% or more, and generally 15 mass% or less, preferably 10 mass% or less, further preferably 8 mass% or less. Further, in the case of containing a fluorine-free polymer typified by polyacrylic acid as a main component, the proportion with respect to the negative electrode active material is generally 0.1 mass% or more, preferably 0.5 mass% or more, further preferably 0.6 mass% or more, and generally 5 mass% or less, preferably 3 mass% or less, further preferably 2 mass% or less.

Examples of the thickener include those similar to the thickener that can be used for the positive electrode. The proportion of the thickener with respect to the negative electrode active material is generally 0.1 mass% or more, preferably 0.5 mass% or more, further preferably 0.6 mass% or more, and generally 5 mass% or less, preferably 3 mass% or less, further preferably 2 mass% or less. When the proportion of the thickener with respect to the negative electrode active material falls below such a range, the coating properties may significantly decrease. Meanwhile, when the proportion exceeds such a range, the proportion of the negative electrode active material in the negative electrode active material layer decreases, which may result in a decrease in battery capacity and an increase in the resistance between negative electrode active materials.

The conductive additive is not limited, as long as it can improve the electric conductivity of the electrolyte, but examples thereof include those similar to the thickener that can be used for the positive electrode.

Examples of the current collectors (the positive electrode current collector and the negative electrode current collector) include a metal foil or a metal mesh of iron, stainless steel, copper, aluminum, nickel, titanium, and the like. Among them, the positive electrode current collector is preferably an aluminum foil or the like, and the negative electrode current collector is preferably a copper foil or the like.

(Method for producing secondary solid-state battery)

The method for producing the secondary solid-state battery of the present disclosure is not limited, and it can be produced by a conventionally known method. Examples of the method for producing each electrode include dispersing and mixing each electrode active material in a solution or a dispersion of a binder dissolved or dispersed in a dispersion medium, to prepare an electrode mixture. The electrode mixture obtained is uniformly applied to a current collector such as a metal foil or a metal mesh, followed by drying and pressing, as required, to form a thin electrode mixture layer on the current collector as a thin film electrode.

Other than the above, the mixture may be produced, for example, by mixing the binder and the electrode active material first and then adding the dispersion medium. Further, it is also possible to produce an electrode sheet by heat-melting the binder and the electrode active material, extruding it with an extruder to produce a thin film mixture, and laminating it onto the current collector coated with an electrically conductive adhesive or a general-purpose organic solvent. Further, a solution or a dispersion of the binder may be applied to the electrode active material preformed in advance.

EXAMPLES

Hereinafter, the present disclosure will be specifically described based on the examples. In the following examples, "parts" and "%" respectively refer to "parts by mass" and "mass%", unless otherwise specified.

Preparation Example 1

1,352 g of pure water containing 1 mass% of emulsifier $F(CF_2)_5COONH_4$ was put into a SUS polymerization tank having an internal volume of 4 L and equipped with a stirrer and sealed. After purging with vacuum nitrogen, the inside of the tank was evacuated, and an amount of ethane corresponding to 400 cc as a chain transfer agent was charged with a syringe under vacuum suction. Thereafter, under stirring at 70°C and 450 rpm, a mixed gas monomer having a composition ratio of VDF/TFE/HFP of 50/38/12 mol% was charged into the tank up to 0.9 MPaG. Thereafter, an aqueous solution of 137.2 mg of APS (ammonium persulfate) dissolved in 10 g of water was pressurized with nitrogen to initiate the reaction. The reaction was initiated by pressurizing 10 g of water again with nitrogen so that no liquid remained in the middle of the reaction tube. A mixed monomer having a composition ratio of VDF/TFE/HFP of 60/35/5 mol% was additionally charged so that the pressure in the tank was maintained. When the amount of the monomer added was 73 g, the stirring speed was lowered, and the gas in the tank was blown to terminate the reaction. The inside of the tank was cooled, and then the contents were collected into a container. The reaction product was washed with water and dried to obtain 72 g of white powder of a fluorine-containing copolymer 2.

The fluorine-containing copolymer 1 obtained had the following compositional features and physical properties.

$$\text{VdF/TFE/HFP} = 60.1/34.8/5.1 \ (\text{mol\%})$$

Number-average molecular weight: 82,300
Mass-average molecular weight: 165,000

Preparation Example 2

1.3 kg of pure water was put into an autoclave having an internal volume of 4 L, followed by sufficiently purging with nitrogen, then 1.3 kg of octafluorocyclobutane was charged, and the inside of the system was kept at 37°C and a stirring speed of 580 rpm. Thereafter, 200 g of a mixed gas of TFE/VdF = 6/94 mol% and 0.4 g of ethyl acetate were charged, and then 1 g of a 50 mass% methanol solution of di-n-propyl peroxydicarbonate was added to initiate polymerization. Since the pressure inside the system decreased as the polymerization progressed, a mixed gas of TFE/VdF = 19/81 mol% was continuously supplied, to maintain the pressure inside the system at 1.3 MPaG. Stirring was continued for 11 hours. Then, after the pressure was released to return to atmospheric pressure, the reaction product was washed with water and dried to obtain 130 g of white powder of the fluorine-containing copolymer 2.

The fluorine-containing polymer 2 obtained had the following compositional features and physical properties.

$$VdF/TFE = 80.0/20.0 \ (mol\%)$$

Number-average molecular weight: 283,000
Mass-average molecular weight: 795,000

Preparation Example 3

1.9 kg of pure water was put into an autoclave having an internal volume of 6 L, followed by sufficiently purging with nitrogen, then 1.8 kg of octafluorocyclobutane was charged, and the inside of the system was kept at 37°C and a stirring speed of 580 rpm. Thereafter, 260 g of a mixed gas of TFE/VdF = 5/95 mol% and 0.6 g of ethyl acetate were charged, and then 2.8 g of a 50 mass% methanol solution of di-n-propyl peroxydicarbonate was added to initiate polymerization. Since the pressure inside the system decreased as the polymerization progressed, a mixed gas of TFE/VdF = 5/85 mol% was continuously supplied, to maintain the pressure inside the system at 1.3 MPaG. Stirring was continued for 32 hours. Then, after the pressure was released to return to atmospheric pressure, the reaction product was washed with water and dried to obtain 900 g of white powder of a fluorine-containing copolymer 3.
The fluorine-containing copolymer 3 obtained had the following compositional features and physical properties.

$$VdF/TFE = 83.0/17.0 \ (mol\%)$$

Number-average molecular weight: 270,000
Mass-average molecular weight: 870,000

Preparation Example 4

A fluorine-containing copolymer 4 was prepared with reference to Preparation Example 2. The fluorine-containing copolymer 4 obtained had the following compositional features and physical properties.

$$VdF/TFE = 95.0/5.0 \ (mol\%)$$

Number-average molecular weight: 272,000
Mass-average molecular weight: 880,000

Preparation Example 5

A fluorine-containing copolymer 5 was prepared with reference to Preparation Example 2. The fluorine-containing copolymer 5 obtained had the following compositional features and physical properties.

$$VdF/TFE = 70.0/30.0 \ (mol\%)$$

Number-average molecular weight: 288,000
Mass-average molecular weight: 830,000

A polyethylene oxide, available from Wako Pure Chemical Industries, Ltd., was used as a comparative example.

Examples 1 to 5 and Comparative Example 1: Production of composite

The fluorine-containing copolymers 1 to 5 obtained and a polyethylene oxide as Comparative Example 1 were used. For each, 20 mass% of LiTFSI as an alkali metal salt and 60 mass% of BMI-TFSI as an ionic liquid were dissolved in dimethylformamide (DMF), to prepare polymer electrolyte solutions 1 to 6. The polymer electrolyte solutions were cast on a copper foil using an applicator and adjusted to a thickness of about 60 $\mu$m after drying. The cast polymer electrolyte solutions were dried at 100°C under reduced pressure for 24 hours, to produce composite films 1 to 6.

(Measurement of volatile content)

The composite films produced as described above were further heated at 100°C under reduced pressure for 48 hours, to calculate the volatile content from the change in mass before and after drying.

(Flammability test)

The composite films produced were exposed to a naked flame of a lighter for 3 seconds, and the ease of flame transfer and flammability were visually observed. If there was no flame transfer, it was determined to be flame retardant.

(Measurement of ion conductivity)

As samples for this measurement, composites similar to those in Examples 1 and 2 were used. Each composite film was punched into a diameter of 13 mm, and stainless steel was used as the working and counter electrodes, to create a bipolar cell. The battery created was connected to a complex AC impedance measuring device using a flow line in a constant-temperature oven set at 60°C, followed by standing for 3 hours in order to allow the electrolyte and the electrodes to be sufficiently blended. Then, measurement was performed, to calculate the ion conductivity from the following formula.

$$\sigma = C/R \ (C = l/S)$$

Here, l represents the thickness of a sample, S represents its area, and R represents its resistance. From the results of Table 3, it turned out that the composite films of Examples 1 to 5 exhibited sufficient ion conductivity as electrolytes for polymer-based solid-state batteries.

(Evaluation of oxidation resistance)

The oxidation resistance of the composite films was evaluated by the LSV (Linear Sweep Voltammetry) method. For the LSV measurement, propylene carbonate was used as a solvent, and the solvent containing 3 mass% of LiTFSI was used. Two preparations were made by adding 1 mass% of each of the aforementioned polymers (Example 1 or Comparative Example 1) to the solution. Each measurement solution prepared in advance was put into a measurement container, and a platinum electrode as a working electrode and those immersed with lithium metal as a counter electrode and a reference electrode were used to form a LSV measurement cell. Then, measurement was performed by sweeping the potential from OCV (open circuit voltage) to 8 V (vs. Li+/Li) on the oxidation side at a sweep rate of 5 mV/s. Figure 1 shows the results. Example 1 was shown to have high oxidation resistance.

[Table 1]

|  | Composition ratio |
|---|---|
| Fluorine-containing copolymer 1 | VDF:TFE:HFP=60:35:5 |
| Fluorine-containing copolymer 2 | VDF:TFE:HFP=80:20:0 |
| Fluorine-containing copolymer 3 | VDF:TFE:HFP=83:17:0 |
| Fluorine-containing copolymer 4 | VDF:TFE:HFP=95:05:0 |
| Fluorine-containing copolymer 5 | VDF:TFE:HFP=70:30:0 |
| Comparative Example | Polyethylene oxide |

[Table 2]

|  | Solid-state electrolyte | Flame retardancy | Volatile content (mass%) |
|---|---|---|---|
| Example 1 | Composite film 1 | ○ | <'0.01 |
| Example 2 | Composite film 2 | ○ | <'0.01 |
| Example 3 | Composite film 3 | ○ | <'0.01 |

(continued)

|  | Solid-state electrolyte | Flame retardancy | Volatile content (mass%) |
|---|---|---|---|
| Example 4 | Composite film 4 | ○ | <'0.01 |
| Example 5 | Composite film 5 | ○ | <'0.01 |
| Comparative Example 1 | Composite film 6 | × | <'0.01 |

[Table 3]

|  | Solid-state electrolyte | Ion conductivity (S/cm) |
|---|---|---|
| Example 1 | Composite film 1 | $3.7 \times 10^{-7}$ |
| Example 2 | Composite film 2 | $6.0 \times 10^{-8}$ |
| Example 3 | Composite film 3 | $6.4 \times 10^{-8}$ |
| Example 4 | Composite film 4 | $9.0 \times 10^{-8}$ |
| Example 5 | Composite film 5 | $3.0 \times 10^{-8}$ |

(Production of lithium ion secondary battery)

[Production of positive electrode]

95 mass% of $LiNi_{0.5}Co_{0.2}Mn_{0.3}O_2$ (NMC) as a positive electrode active material, 3 mass% of acetylene black as a conductive material, and 2 mass% of polyvinylidene fluoride (PVdF) as a binder were mixed in an N-methylpyrrolidone solvent to form a slurry. The slurry obtained was applied onto one side of an aluminum foil having a thickness of 15 $\mu$m to which a conductive additive was applied in advance, dried, and roll-pressed with a press machine. The resultant was cut out to form a positive electrode 1. A positive electrode 2 was produced in the same manner as above except that $LiMn_{1.5}Ni_{0.5}O_4$ (LNMO) as a positive electrode active material was used.

[Production of negative electrode]

To 98 parts by mass of a carbonaceous material (graphite), there were added 1 part by mass of an aqueous dispersion of sodium carboxymethylcellulose (concentration of sodium carboxymethylcellulose: 1 mass%) and 1 part by mass of an aqueous dispersion of styrene-butadiene elastomer (concentration of styrene-butadiene elastomer: 50 mass%) as a thickener and a binder, followed by mixing with a disperser, to form a slurry. The slurry obtained was applied onto a copper foil having a thickness of 10 $\mu$m, dried, and rolled with a press machine. The resultant was cut out to form a negative electrode.

[Production of aluminum laminate cell]

The positive electrode, the composite film 1, and the negative electrode were opposed and rolled with a roll press machine, to enhance the adhesion.
Thereafter, it was punched, attached with an electrode tab, sealed, precharged, and then aged, to produce a lithium ion secondary battery 1 having a design capacity of 1 Ah. A lithium ion secondary battery 2 was produced in the same manner as above except that a positive electrode 2 was used.

[Evaluation of initial discharge capacity]

While the secondary battery 1 produced above was interposed between plates to be pressurized, the battery was charged at a constant current and a constant voltage to 4.2 V at 25°C with a current corresponding to 0.1 C. While the secondary battery 2 produced above was interposed between plates to be pressurized, the battery was charged at a constant current and a constant voltage to 4.8 V at 25°C with a current corresponding to 0.1 C.

(Nail penetration test)

The lithium ion secondary batteries 1 and 2 produced were fixed to a horizontal table in an atmosphere of 25°C, and a ceramic nail having a diameter of 3 mm was inserted from above the battery toward the center of the battery at a nail penetration speed of 80 mm/s for the nail penetration test. Then, the state was observed, and the temperature was measured.

In the battery produced using the composite film 1, no fuming, explosion, or ignition was observed, and the temperature change on the surface of the battery was within 5°C.

From the above, it was confirmed to be a battery with high safety.

Industrial Applicability

The composite of the present disclosure can be suitably used as an electrolyte for polymer-based solid-state batteries. The polymer-based solid-state battery obtained has both excellent oxidation resistance and excellent flame retardancy.

**Claims**

1.    A composite comprising a fluorine-containing copolymer that comprises a tetrafluoroethylene (TFE) unit and a vinylidene fluoride (VdF) unit, and an alkali metal salt, wherein

      the fluorine-containing copolymer has a total content of the TFE unit and the VdF unit of 1 to 99 mol%, and
      the composite has a volatile content of 0.1 mass% or less with respect to the entire composite.

2.    The composite according to claim 1, wherein
      the fluorine-containing copolymer further comprises 0.1 to 10 mol% of a hexafluoropropylene (HFP) unit.

3.    The composite according to claim 1 or 2, wherein

      the alkali metal salt is at least one lithium salt selected from $LiPF_6$, $LiBF_4$, LiTFSI, LiFSI, $LiPO_2F_2$, and LiBOB, and
      a content of the alkali metal salt is 0.1 to 90 mass% with respect to the fluorine-containing copolymer.

4.    The composite according to claim 1, 2, or 3, further comprising:

      at least one ionic liquid selected from combinations of 1-butyl-3-methyl imidazolium (BMI) cation or N-methyl-N-butyl-pyrrolidium (Pyr14) cation as an organic cation and BF4 anion or bis(trifluoromethanesulfonyl) imide (TFSI) anion as an anion, wherein
      a content of the ionic liquid is 1.0 to 500 mass% with respect to the fluorine-containing copolymer.

5.    A polymer electrolyte consisting of the composite according to any one of claims 1 to 4.

6.    An electrochemical device comprising the polymer electrolyte according to claim 5.

7.    A polymer-based solid-state battery comprising the polymer electrolyte according to claim 5.

8.    The polymer-based solid-state battery according to claim 7, wherein the battery is a lithium ion secondary battery.

9.    An actuator comprising the polymer electrolyte according to claim 5.

Figure 1

**EP 4 144 797 A1**

| INTERNATIONAL SEARCH REPORT | International application No. |
|---|---|
| | PCT/JP2021/017013 |

**A. CLASSIFICATION OF SUBJECT MATTER**
C08L 27/16(2006.01)i; C08F 214/22(2006.01)i; C08K 3/00(2018.01)i; C08K 5/00(2006.01)i; H01B 1/06(2006.01)i; H01G 9/20(2006.01)i; H01G 11/56(2013.01)i; H01M 6/18(2006.01)i; H01M 8/10(2016.01)i; H01M 8/1039(2016.01)i; H01M 8/1048(2016.01)i; H01M 10/0525(2010.01)i; H01M 10/0565(2010.01)i
FI:    C08L27/16; C08K3/00; C08K5/00; C08F214/22; H01M10/0525; H01M10/0565; H01M6/18 E; H01G9/20 105; H01M8/1039; H01M8/1048; H01M8/10 101; H01B1/06 A; H01G11/56
According to International Patent Classification (IPC) or to both national classification and IPC

**B. FIELDS SEARCHED**

Minimum documentation searched (classification system followed by classification symbols)
C08L27/16; C08F214/22; C08K3/00; C08K5/00; H01M10/0525; H01M10/0565

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2010-250968 A (PANASONIC CORP.) 04 November | 1–3 |
| A | 2010 (2010-11-04) paragraphs [0137]-[0139] | 4–9 |
| X | US 2017/0222244 A1 (SAMSUNG ELECTRONICS CO., LTD.) | 1, 3–8 |
| Y | 03 August 2017 (2017-08-03) claims, paragraphs [0037]-[0038], [0041]-[0042], examples | 1–9 |
| Y | JP 2001-266942 A (TEIJIN LTD.) 28 September 2001 (2001-09-28) paragraphs [0052]-[0060] | 1–9 |
| Y | JP 10-284127 A (ASAHI GLASS CO., LTD.) 23 October 1998 (1998-10-23) paragraphs [0036]-[0047] | 1–9 |

☒ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 July 2021 (08.07.2021) | 20 July 2021 (20.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | INTERNATIONAL SEARCH REPORT | International application No. |
|---|---|---|
| | | PCT/JP2021/017013 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2004-127846 A (TOYOBO BOSEKI KABUSHIKI KAISHA)<br>22 April 2004 (2004-04-22) paragraph [0004] | 9<br>1-8 |
| Y<br>A | JP 2006-236837 A (FUJI PHOTO FILM CO., LTD.) 07<br>September 2006 (2006-09-07) paragraph [0110] | 9<br>1-8 |
| Y<br>A | JP 2010-142108 A (SAMSUNG ELECTRONICS CO., LTD.)<br>24 June 2010 (2010-06-24) claims | 9<br>1-8 |

INTERNATIONAL SEARCH REPORT

Information on patent family members

| International application No. |
| --- |
| PCT/JP2021/017013 |

| Patent Documents referred in the Report | Publication Date | Patent Family | Publication Date |
| --- | --- | --- | --- |
| JP 2010-250968 A | 04 Nov. 2010 | (Family: none) | |
| US 2017/0222244 A1 | 03 Aug. 2017 | KR 10-2017-0092327 A<br>CN 107039680 A | |
| JP 2001-266942 A | 28 Sep. 2001 | (Family: none) | |
| JP 10-284127 A | 23 Oct. 1998 | (Family: none) | |
| JP 2004-127846 A | 22 Apr. 2004 | US 2005/0095486 A1<br>paragraph [0004]<br>EP 1477515 A1<br>CN 1633465 A | |
| JP 2006-236837 A | 07 Sep. 2006 | (Family: none) | |
| JP 2010-142108 A | 24 Jun. 2010 | US 2010/0148635 A1<br>claims<br>EP 2202265 A1<br>KR 10-2010-0068167 A<br>CN 101798429 A | |

**EP 4 144 797 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11028916 A
- JP 2001035534 A